Europäisches Patentamt

European Patent Office

Office européen des brevets

(19)

(11) Publication number: **0 082 836**
**B1**

(12) # EUROPEAN PATENT SPECIFICATION

(45) Date of publication of patent specification: **13.02.85**

(21) Application number: **83100917.0**

(22) Date of filing: **03.06.81**

(60) Publication number of the earlier application in accordance with Art. 76 EPC: **0 042 986**

(51) Int. Cl.⁴: **G 11 B 23/04,** G 11 B 15/66, G 11 B 23/26

(54) **Magnetic tape cartridge.**

(30) Priority: **30.06.80 US 164733**
**30.06.80 US 164732**

(43) Date of publication of application:
**29.06.83 Bulletin 83/26**

(45) Publication of the grant of the patent:
**13.02.85 Bulletin 85/07**

(84) Designated Contracting States:
**CH DE FR GB IT LI NL SE**

(56) References cited:
**GB-A- 716 632**
**US-A-3 105 645**
**US-A-3 154 236**
**US-A-3 424 393**

(73) Proprietor: **International Business Machines Corporation**
**Old Orchard Road**
**Armonk, N.Y. 10504 (US)**

(72) Inventor: **Crawford, Roy Patrick**
**14711 Aloha**
**Saratoga California 95070 (US)**
Inventor: **Gilovich, Paul Tnothony**
**18701 Kosich Drive**
**Saratoga California 95070 (US)**
Inventor: **McMurtry, David Harwood**
**5945 E. Paseo Crimarron**
**Tucson Arizona 85715 (US)**
Inventor: **Cranna, Darlene Kari Nora**
**9800 E.Rosewood Street**
**Tucson Arizona 85710 (US)**

(74) Representative: **Lewis, Alan John**
**IBM United Kingdom Patent Operations Hursley Park**
**Winchester, Hants, SO21 2JN (GB)**

Courier Press, Leamington Spa, England.

## Description

The invention relates to magnetic tape cartridges and provides a single reel magentic tape cartridge containing a reel on which a length of magnetic tape is wound with the free end of the tape connected to an externally accessible, generally rectangular shaped, leader block, including an open sided coupling slot having an axis of its entrance aperture parallel to the reel axis and extending into the block from one face towards but not as far as the opposite face. Such cartridges are known from US—A—3424393.

The invention provides a single reel magnetic tape cartridge containing a reel on which a length of magnetic tape is wound with the free end of the tape connected to an externally accessible, generally rectangular shaped, leader block, including an open sided coupling slot having an axis of its entrance aperture parallel to the reel axis and extending into the block from one face towards but not as far as the opposite face, characterised in that said slot has at its inward end an enlarged counter bored portion extending from the lower surface of the block in the direction parallel to the reel axis such that when used with a tape threading device having a pick-up arm comprising a shank and an enlarged head, the shank can enter said slot and be moved upwardly to engage said head with said enlarged counter bored portion and thereby lock said block with said pick-up arm.

The foregoing cartridge of the invention has the substantial advantage that a positive lock (i.e. a coupling which is very unlikely to be accidentally uncoupled) is formed between the pick-up arm and the leader block. This is achieved since two stages of relative movement must occur to engage or disengage the arm and the block. The first stage of relative movement during engagement carries the shank laterally into the slot through the entrance aperture to a position in which the head is aligned with the socket but is displaced axially therefrom. The second stage of relative movement during engagement carries the head axially into the socket until it locks therewith. During dis-engagement the two stages of relative movement occur in the reverse order.

The invention will now be described in more detail with reference to the accompanying drawings, in which:

FIG 1. illustrates a reel-to-reel type magnetic tape transport with which a cartridge embodying the present invention may be advantageously employed;

FIG. 2 is a plan view of an automatic tape threading apparatus with which a cartridge embodying the present invention can be connected;

FIG. 3 is a view elevation of the apparatus shown in FIG. 2;

FIG. 4 is an enlarged sectional view illustrating in more detail the coupling device and its function relative to the leader block.

FIG. 5 is a perspective view of a second reel-to-reel magnetic tape drive having an automatic threading apparatus for use with a cartridge embodying the present invention;

FIG. 6 is a schematic plan view of the continuous guide channel of the threading apparatus shown in FIG. 5 and showing the tape path defined by the various components;

FIG. 7 is a perspective view in section of the channel shown in FIG. 6;

FIG. 8 is a view showing the details of the coupling device and the manner of attaching the coupling device to the guide band and the leader block;

FIGS. 9, 10 and 11 illustrate the relative movements involved in coupling the device to the leader block attached to the tape.

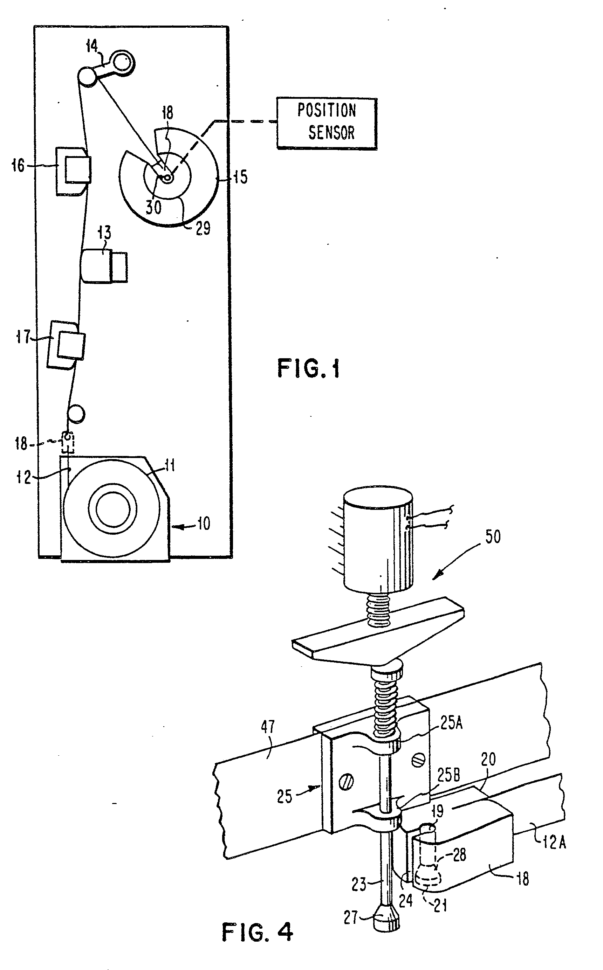

FIG. 1 shows in plan view a typical magnetic tape transport which includes a cartridge 10 for holding a supply reel 11 of conventional magnetic tape 12 which is threaded past a magnetic transducer 13 around a tension transducer 14 to the take-up reel 15. A pair of tape guides 16 and 17 are also illustrated whose function is to maintain tape 12 in flux transducing relationship with the flux gap of the magnetic transducer 13. The drive motors and the controls therefor are not illustrated in that any conventional prior art reel drive system may be employed. The details of the tension transducer 14 are also not illustrated since the overall function and operation of such devices are well-known in the art and since the details form no part of the present invention.

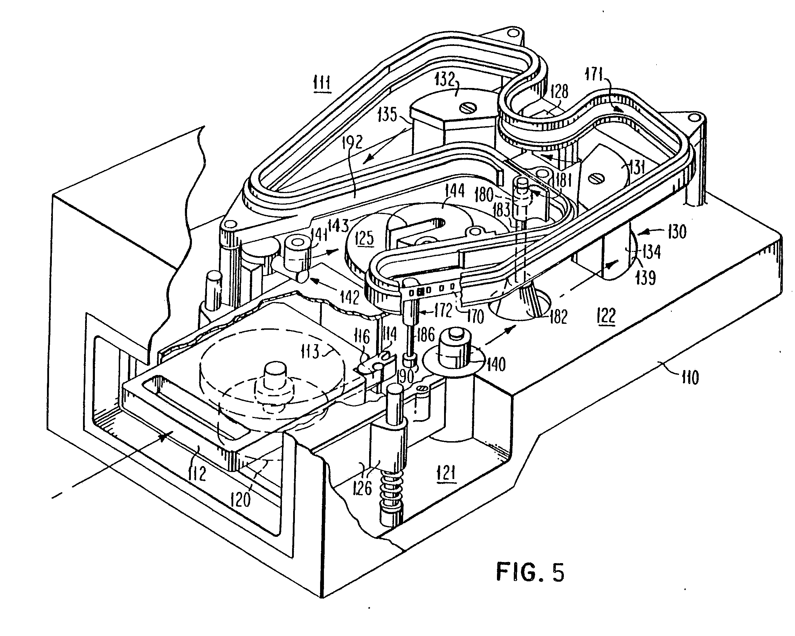

As shown in FIG. 1, the leading end of the tape 12 to be wound from the supply reel is provided with a leader block 18 which is shown in more detail in FIG. 4.

The construction of the leader block is such that it (1) can be selectively engaged by a coupling device of the automatic threading apparatus, and (2) can be positioned relative to the take-up reel so that tape can be wound on the take-up reel without disengaging the coupling device from the leader block.

With reference to FIG. 4, the leader block 18 shown therein is generally rectangular in shape and is provided with a pin receiving opening 19 at its leading edge. The trailing edge 20 of the leader block is provided with suitable means for attaching the leading end 12A of the tape. The pin receiving opening 19 has its axis parallel to the plane of the tape and, in practice, block 18 may be releasably held by the cartridge 10 with the axis of the pin receiving opening 19 parallel to the axis of rotation of reel 11. The opening 19 extends through the block 18, with the lower portion 21 of the opening being somewhat larger to accommodate the coupling pin 23 of the coupling device 25. A slot 24 extends from the front edge of the leader block to the opening 19 such that, in plan view, the bottom portion 21 of the block 18 comprises a passage having the shape of a keyhole. The size of the slot 24 is sufficient to permit the pin 23 on the coupling device 25 to slide through in an unrestricted manner into the opening 19 when relative movement occurs in a direction normal to the pin axis. Subsequent relative movement in a direction parallel to the axis of the pin 23 permits the cone-shaped end 27 of the pin to engage the cone-shaped recess 28 at the bottom 21 of the leader block 18. The pin 23 of coupling device 25 is attached for axial sliding movement relative to a band member 47 (to be discussed later) by means of bearing elements 25A and 25B fixedly attached to the band.

As shown in FIG. 1, the hub 29 of the take-up reel 15 is provided with a leader block receiving slot 30 which has a shape matching that of the leader block 18. The slot extends from the outer periphery of the hub 29 radially inward past the axis of rotation a sufficient distance to position the axis of the pin 23 of the coupling device coaxially with the axis of rotation of the take-up reel 15. With the pin 23 so positioned, the leader block 18 is free to rotate relative to the pin 23 as tape is wound on the take-up reel 15 so there is no necessity to disengage the coupling device of the threading apparatus from the leader block 18 during the winding operation. Alternately, the pin 23 could be designed to rotate with the leader block 18 and the reel 15 relative to the remaining portion of the coupling device which is held stationary by the threading apparatus.

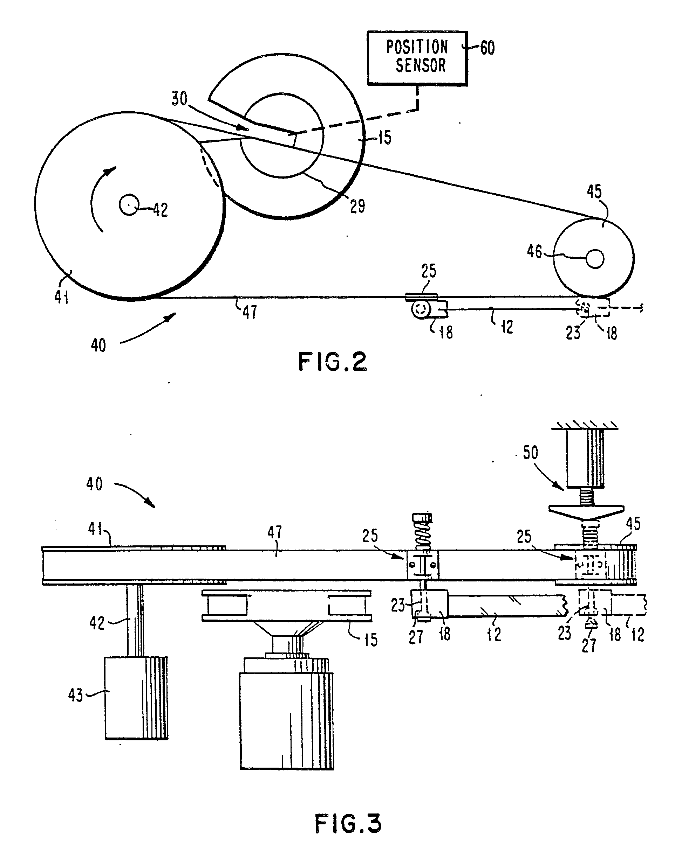

The mechanism 40 for moving the pin 23 from a first position where it is selectively coupled and uncoupled from the leader block 18 to a second position in the substantial center of the take-up reel 15 will now be described in connection with FIGS. 2 and 3. The mechanism, as shown, comprises pulley 41 which is coupled to a shaft 42 of motor 43. Motor 43 is mounted to position the shaft 42 parallel to the axis of rotation of the supply and take-up reels 11 and 15. The diameter of pulley 41 is related to the shape of a predetermined section of the tape path.

The mechanism further includes an idler pulley 45 which is journalled for rotation about an axis which is also parallel to the axis of rotation of the supply and take-up reels 11 and 15. The diameter of the pulley 45 and the position of its shaft 46 is chosen so that the pin 23 of the coupling device is positioned in a coupling relationship with the leader block 18 when the coupling device is attached to the continuous band member 47 which encircles the pulleys 41 and 45. As shown in FIG. 3, the pulleys 41 and 45 are positioned above the plane of the tape reels such that a point on the band 47 traces the tape path from the supply reel 11 to the take-up reel 15.

The coupling device 25, including pin 23, is permanently attached to the exterior surface of the band member, as shown in FIG. 4, and positions the pin 23 with its axis parallel to the pulley axis. The pin 23, as shown, is mounted for sliding movement axially between two positions.

The first position is where the cone-shaped end 27 of the pin 23 is below the botton surface of the leader block 18 shown in dotted line position in FIG. 3. The second position is where the cone-shaped portion 27 of the pin 23 is seated in the matching cone-shaped recess 28 provided in the leader block 18. The coupling of the pin 23 to the leader block 18 is accomplished by the relative motion of the two parts in first the direction normal to the pin axis and second vertically, as shown in FIG. 4. It will be recognised that the equivalent function can be achieved by the movement of the leader block 18 (or cartridge 10 and leader block 18) in orthogonal directions while the pin 23 is stationary with corresponding results. Various arrangements known in the art may be employed to achieve the function of obtaining the axial movement of the pin relative to the leader block. As shown in FIG. 4, the arrangement 50 involves a spring member biasing the pin upward and a solenoid operated lever which overcomes the normal biasing of the spring when the leader block is to be decoupled from the coupling device.

As mentioned previously, the band member 47 generally overlies the tape path so that when the driven pulley 41 is rotated in a clockwise direction as seen in FIG. 2, the leader block 18 and the magnetic tape 12 attached thereto are pulled from the cartridge 10 and follow the path traversed by the coupling device 25 which is shown schematically in FIG. 2. As a result, the tape 12 is threaded through the tape guides 16 and 17 and past the transducer 13 around the tension transducer 14 to the take-up reel 15. The leader block 18 is positioned in the leader block receiving slot 30 of the take-up reel 15 since the tape reel 15 has been rotated to a point which will receive the leader block. The position of the take-up reel may be established by any suitable sensing device 60, as shown diagrammatically in FIG. 2. The coupling pin 23 is now disposed substantially coaxial with the axis of rotation of the take-up reel 15 so that rotation of the take-up reel 15 and hence, the leader block 18 can occur without any adverse affect on the coupling pin 23 or its mounting arrangement on the band 47.

The leader block 18 is returned over the tape path by either reversing the pulley motor 43 and simultaneously energising the supply reel drive motor in the reverse direction to take up the slack tape 12 as the leader block 18 retreats, or by the supply reel motor being employed to pull the tape 12 back with the band 47 of the threading mechanism functioning solely as a guide for the leader block 18.

The band member 47 is flexible enough to permit some transverse movement of the leader block 18 and coupling device 25 relative to the actual tape path where it encounters a section of the tape path which involves only shallow curves, such as might occur at the guides 16 and 17 adjacent the magnetic transducer 13.

In tape transports which involve a tape path having a segment involving a more substantial "wrap" of the tape around the transducers, additional idler pulleys may also be employed to cause the band 47 to track the actual tape path.

The particular mechanism illustrated in FIGS. 2 and 3 for moving the coupling pin 23 once it has engaged the leader block 18 over the tape path to the general vicinity of the center of the take-up reel 15 is one example of a mechanism which can be designed to trace a prescribed circuitous tape path. However various other arrangements may be employed.

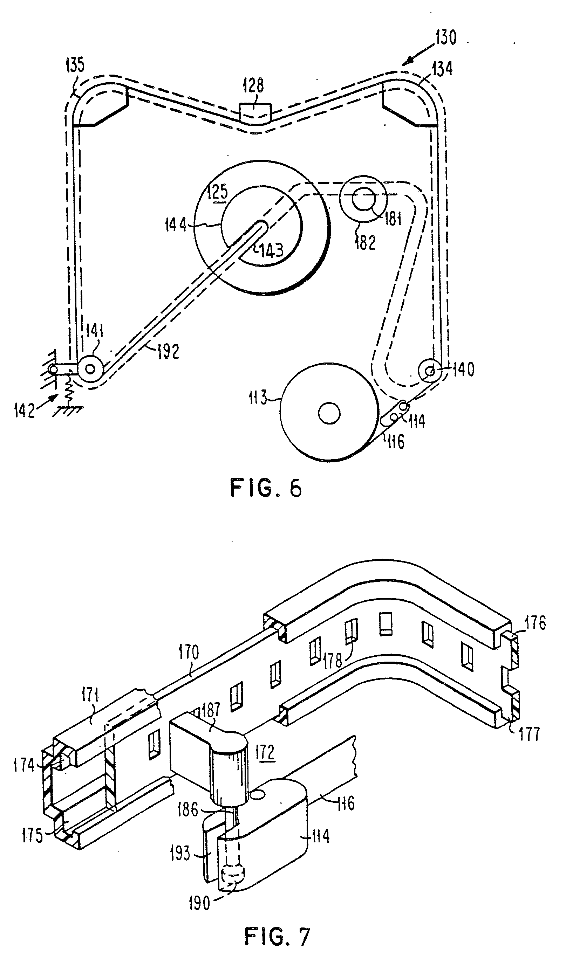

FIG. 5 is a perspective view of a reel-to-reel type magnetic tape drive in which the present invention has been embodied. As shown in FIG. 5 and in the diagrammatic plan view of the drive shown in FIG. 6, the drive consists generally of a tape transport appratus and the automatic threading apparatus 111. The tape transport apparatus includes a baseplate 110 on which various standard components of a magnetic tape transport are mounted. The supply cartridge 112 is replaceable and contains a reel 113 of magnetic tape 116. A leader block 114 (best shown in FIG. 5) is disposed externally of the cartridge. The leading edge of the tape 116 is attached to the side of the leader block 114.

The drive motor 120 for the supply reel 113 is mounted underneath the baseplate 110 so that its shaft extends normal to the surface 121 and slightly above the surface 122 of baseplate 110. The motor shaft is provided with a suitable clutching arrangement which permits the motor to be coupled to the hub of the supply reel 113 by movement of the cartridge 112 in a vertical direction, as shown in FIG. 5 normal to surface 122. As shown, this vertical movement is achieved by the cartridge loading mechanism, a portion of which is designated by reference character 126 in FIG. 5.

The take-up reel 125 is permanently attached to a motor (not shown) which is mounted to the baseplate 110 in a suitable fashion. The supply reel 113, when coupled to its motor, lies in substantially the same plane as the take-up reel 125 so that a point on the tape 116 moves when being transported in a plane normal to both motor shafts. Transfer of the tape 116 between the take-up reel 125 and the supply reel 113 past the magnetic transducer 128 is achieved by control of the respective driving motors for the reels, as is well known in the art.

Magnetic transducer 128 is part of the transducer assembly 130 which includes the guide bearing 131 and 132 disposed on opposite sides of the transducer 128. Guide bearings 131 and 132 are positioned in the tape path so that the uncoated side 116A of the magnetic tape 116 slides over the surfaces 134 and 135 which may be forced air lubricated surfaces.

Transducer assembly 130 is inserted through an opening 139 in the baseplate 110 and securely mounted thereto. The two remaining components which affect the shape of the tape path are the guide 140 and the roller 141 of the tension transducer 142.

Roller guide 140 is mounted on baseplate 110 with its axis parallel to the reel axis. The tension transducer 142 is attached to baseplate 110 so that the axis of the roller 141 is also parallel to the reel axis.

The details of the leader block 114, the construction of the hub 114 of the take-up reel 125, and the relationship of these elements to each other, are substantially as hereinbefore described in relation to Figures 1 and 4. In particular the hub 144 of the take-up reel is provided with a radially extending slot 143, similar to the slot 30 (FIG. 3) for receiving the end of the leader block 114 which is permanently attached to the end of the tape on the supply reel. The relationship is such that when the leader block 114 is properly positioned in the slot, the tape 116 attached thereto is positioned to be wrapped on the hub 114 by merely rotating the take-up reel 125 since the length of the slot corresponds generally to the length of the leader block 114. During the winding process, the leader block 114 is maintained in the slot 143 of the take-up reel 125. The automatic threading apparatus provides two functional aspects. The first involves moving and guiding a coupling device 172 from the supply reel 112 to the take-up reel 125, and the second involves selectively coupling the leader block 114 at the supply reel in a manner to permit the leader block 114 to be rotated with the take-up reel without being uncoupled from the threading apparatus. The moving and guiding function is implemented, as shown in FIG. 5, by a sprocketed drive flexible tape loop 170 which is disposed in a sliding guiding relationship with a continuous channel 171.

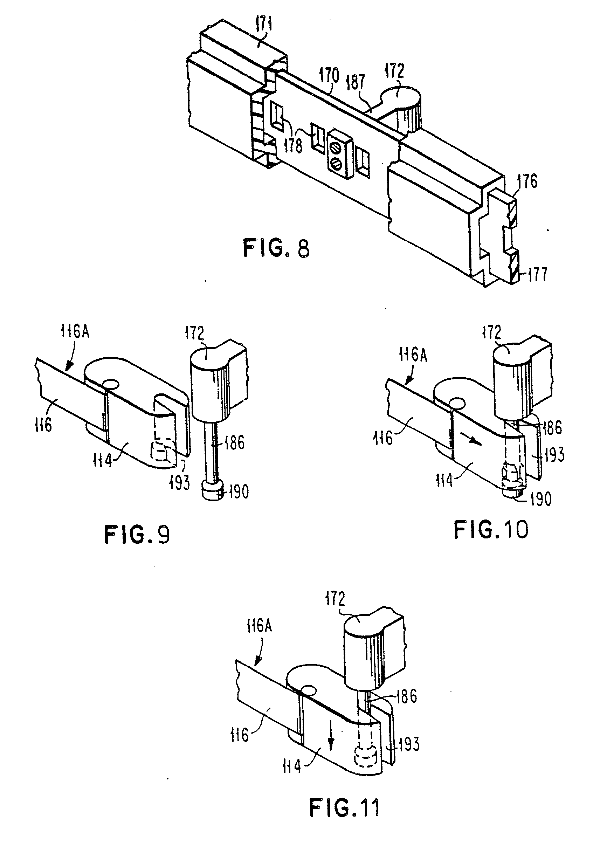

FIG. 7 shows the details of the channel 171 and the sprocket guide tape 170. FIG. 8 shows the details of the coupling device 172. Channel 171 is provided with upper and lower slots 174 and 175, respectively, in which the upper and lower edges 176 and 177 of the sprocket tape member 170 are disposed. The surfaces of the slots 174 and 175 may be coated with suitable material to reduce any frictional drag on the guide tape 170. The slotted portions of the channel are held in alignment by the integral back portion shaped to provide the necessary rigidity to the channel and allow for the means for connecting the coupling device 172 to the tape 170.

The guide tape 170 is flexible enough along the lengthwise direction to readily conform to the various curves in the channel 171. As shown, the tape is provided with a series of sprocket holes 178 which cooperate with a sprocket gear 180 (FIG. 5) mounted in a housing 181 attached to the channel 71. A motor 182 drives shaft 183, shown in FIG. 5, to rotate sprocket gear 180 and, hence, move the sprocket tape 170 relative to channel 171.

The coupling device 172, shown in FIG. 7, comprises a coupling pin 186 and a member 187 which is suitably attached to sprocket tape 170 so as to position the axis of the coupling pin 186 substantially parallel to the reel axis. Pin 186 may be permanently secured in member 187 or, alternately, it could be mounted for rotation about its axis relative to member 187. The distal end 190 of the pin 186, which extends below the member 187, may be slightly longer than the axis of the pin receiving opening 193 in leader block 114, or the leader block may be notched at the bottom front edge. When the coupling device 172 is positioned at its home position, as shown in FIG. 5 by movement of the sprocketed tape, leader block 114 is coupled to pin 186 when the cartridge 112, shown in FIG. 5, is inserted into the tape drive and the hub of the supply reel is lowered to engage the supply reel drive motor.

Energising the sprocket drive motor 182 causes movement of the tape 170, coupling device 172, and leader block 114 towards the take-up reel 125 which has been prepositioned with the radially extending leader block receiving slot 143 aligned parallel to the section 192 (FIG. 6) of the channel 171. The sprocket drive motor 182 remains energised to move tape 170 until the coupling device 172 has positioned the leader block 114 in the slot 144 of the take-up reel 125. At this point, the axis of pin 186 is coaxial with the axis of rotation of the take-up reel 125 so that the tape transport process over the established tape path may proceed by merely energising the respective reel drive motors.

The leader block 114 is returned to its initial starting position after the tape 116 has been unwound from the hub of the take-up reel 125 merely by reversing the action of the sprocket drive motor 182 which returns the coupling device 172 to the position shown in FIG. 5.

The leader block 114 is decoupled from the pin 186 as a result of unloading the supply reel cartridge. The movement of the pin 186 during loading and unloading operations of the cartridge 112 are shown diagrammatically in FIGS. 9, 10 and 11. As shown, the cartridge is initially positioned with the opening 193 in the leader block 114 in line with the pin 186. As the cartridge is moved in the direction of the arrow in FIG. 5, the opening 193 is moved to embrace the pin 186 as shown in FIG. 10. Thereafter the cartridge is moved down onto the drive spindle of the motor 120 engaging the distal end 190 of the pin 186 in a corresponding enlarged seating at the lower end of the opening 193 as shown in FIG. 11.

It should also be apparent to those skilled in the art that while the disclosed embodiment describes a reel-to-reel type tape transport, the invention can be applied to other types of magnetic tape transports and would also be applicable to any type of web transport apparatus where a web wound on a supply reel is transported through one or more processing stations disposed along a complex web path to a take-up reel and then rewound onto the supply reel by the same transport mechanism.

It should also be apparent that for very wide webs, a second transport mechanism moving identically to the first transport mechanism could lie on the opposite side of the baseplate. The leader block would now look like a leader bar supported on both ends by the transport mechanism and operating through slots in the baseplate.

Hereinbefore there has been described a web transport which transfers elongated flexible web material wound on a supply reel to web take-up reel over a predefined nonlinear web path which includes a web processing station, and which comprises an automatic threading apparatus for moving a leader block attached to the leading end of the web material wrapped on said supply reel over said web path from a first predefined position to a second position which couples said leader block to said take-up reel for subsequent conjoint rotational movement with said take-up reel about the axis of rotation of said take-up reel during winding and unwinding of web material on and off said take-up reel. The threading apparatus comprises a device adapted to selectively couple said leader block to said device at said first predetermined position which permits rotation of said block relative to said device about a first axis parallel to the axis of said reels; a mechanism for moving said device said coupled leader block from said first predetermined position to said second position to dispose said first axis coaxially with the axis of said take-up reel and said web material in winding relationship to the hub of said take-up reel, for guiding said coupling device during movement over a predetermined path which corresponds to said tape path; and means for securing said coupling device to said mechanism.

This specification includes subject matter in common with that of European patent applications Nos. 81104224.1 and 81104238.1 published as E. P. publications Nos. 42,986 and 42,989, the first of which claims a method of threading and a web transport apparatus and the second of which claims a web transport apparatus.

While the invention has been particularly shown and described with reference to the preferred embodiment thereof, it will be understood by those skilled in the art that various changes in the form and details may be made therein without departing from the scope of the claims.

**Claims**

1. A single reel magnetic tape cartridge containing a reel on which a length of magnetic tape is wound with the free end of the tape connected to an externally accessible, generally rectangular shaped, leader block (18), including an open sided coupling slot having an axis of its entrance aperture (24) parallel to the reel axis and extending into the block from one face towards but not as far as the opposite face, characterised in that said slot has at its inward end an enlarged counter bored portion (21, 28) extending from the lower surface of the block in the direction parallel to the reel axis such that when used with a tape threading device having a pick-up arm comprising a shank (23) and an enlarged head (27), the shank can enter said slot and be moved upwardly to engage said head with said enlarged counter bored portion and thereby lock said block with said pick-up arm.

2. A cartridge as claimed in claim 1, further characterised in that the inner end (28) of the counterbored portion tapers in cross section.

**Patentansprüche**

1. Einzelmagnetbandkassette mit einer Spule, worauf eine Laenge des Magnetbandes, dessen freies Ende mit einem auesserlich zugaenglichen, im allgemeinen recheckigen Fuehrungsblock (18) verbunden ist, gewickelt ist, mit einer offenen in einer Seite liegenden Verbindungsschlitze, die eine zu der Spule-Achse parallel liegende Achse ihres Durchgangs (24) aufweist, und sich in einer Seite des Blockes herein jedoch nicht so weit bis an der entgegensetzten Seite erstreckt, dadurch gekennzeichnet, dass die Schlitze in ihrem inneren Ende eine vergroesserte zylindrische Senkung (21, 28) aufweist, die sich von der unteren Flaeche ab in der zu der Spule-Achse parallelen Richtung so aufwaerts erstreckt, dass beim Gebrauch mit einer Magnetband-Gewindevorrichtung, die einen Anzugsarm mit einem Gewindestift (23) und einem kegeligen Ende (27) aufweist, der Gewindestift in der Schlitze einsteckbar und aufwaerts so bewegbar ist, dass er das kegelige End mit dem vergroesserten zylindrischen Senkung in Eingriff bringt und deswegen den Block mit dem Anzugsarm verschliesst.

2. Kassette nach Anspruch 1, weiterhin dadurch gekennzeichnet, dass das innere Ende (28) der zylindrischen .Senkung in einer Querschnittsbewegung konisch zulaueft.

**Revendications**

1. Cassette à bande magnétique à bobine unique contenant une bobine sur laquelle est monté un morceau de bande magnétique, l'extrémité libre de la bande étant connectée à un bloc amorce de forme rectangulaire, accessible par l'extérieur (18) comprenant une encoche dont l'axe de l'ouverture d'entrée (24) est parallèle à l'axe de la bobine et se prolonge dans le bloc depuis une première face vers la face opposée sans toutefois atteindre cette dernière, caractérisée en ce que ladite encoche a sa partie interne alésée et élargie (21, 28) se prolongeant depuis la surface inférieure du bloc dans la direction parallèle à l'axe de la bobine de sorte que, lorsqu'elle est utilisée avec un dispositif d'enfilage de bande ayant un bras collecteur comportant une tige (23) et une tête élargie (27), la tige puisse pénétrer dans ladite encoche et se déplacer vers le haut afin que la tête puisse venir s'engager avec ladite partie alésée élargie pour verrouiller ledit bloc avec le bras collecteur.

2. Cartouche selon la revendication 1, caractérisée en outre en ce que la coupe de la partie alésée (28) est conique.

POSITION SENSOR

FIG. 1

FIG. 4

FIG.2

FIG.3

2

FIG. 5

0082 836

FIG. 6

FIG. 7

4

FIG. 8

FIG.9

FIG.10

FIG.11